# EUROPÄISCHE PATENTSCHRIFT

(11) **EP 0 674 131 B1**
(45) Veröffentlichungstag und Bekanntmachung des Hinweises auf die Patenterteilung: **22.12.1999**
(21) Anmeldenummer: 95104180.5
(22) Anmeldetag: 22.03.1995
(51) Int. Cl.: F16L 55/16

(54) **Schlauch zum Auskleiden von Hausanschlüssen**
Tubular liner for lateral pipes
Revêtement tubulaire pour un tuyau de branchement

(30) Priorität: 26.03.1994 DE 4410592
(43) Veröffentlichungstag der Anmeldung: 27.09.1995
(73) Patentinhaber: STEHMEYER & BISCHOFF GmbH & Co. KG, D-28307 Bremen (DE)
(72) Erfinder: Linck, Hans-Peter, D-45234 Essen (DE)
(74) Vertreter: Eisenführ, Speiser & Partner

(56) Entgegenhaltungen:
- EP-A- 0 518 521
- GB-A- 2 243 658

## Beschreibung

Die Erfindung betrifft einen Schlauch zum Auskleiden von Hausanschlüssen, die in einen mit einem Innenrohr ausgekleideten Kanal einmünden, wobei der Schlauch aus einem dehnbaren, gewebten oder gestrickten Trägermaterial, das mit einer aushärtenden Kunstharzmasse getränkt oder beschichtet ist, besteht und zu einem Anschlußformstück aushärtet, welches eine fluiddichte Verbindung zwischen dem Innenrohr des Kanals und dem Hausanschluß bildet, wobei der dem Innenrohr zugeordnete Endbereich des Trägermaterials einen an die Wandung des Innenrohrs anschließenden Flansch aufweist. Ein solcher Schlauch ist bereits aus der EP-A-518 521 bekannt.

Bei der Sanierung alter Abwasserkanäle werden diese mit einem Innenrohr ausgekleidet. Die Abdichtung undichter Seitenzuläufe, vornehmlich der Hausanschlüsse, bleibt ein Problem. Die Verbindung zwischen desn Hausanschlüssen und dem Kanal ist oft undicht. Abwasser kann hier austreten und Grundwasser eintreten. Fortschreitende Schäden an dem Kanal trotz Innenrohr-Auskleidung sind die Folge.

Bei einem aus EP-A-0 391 046 bekannten Verfahren wird die Innenrohrauskleidung im Bereich der Hausanschlüsse aufgefräst. Ein Schlauch mit dem eingangs beschriebenen Aufbau wird in die Hausanschlußöffnung eingeführt und mit Hilfe einer Anpreßvorrichtung, beispielsweise mit einer durch Druckluft aufblasbaren hutförmigen Membran, an die Wandung des Hausanschlusses sowie im Mündungsbereich an das Innenrohr angepreßt. In dieser Position härtet der Schlauch zu einem Anschlußformstück aus, welches fluiddicht an der Wandung des Hausanschlusses anliegt und endseitig mit der Innenwandfläche des in den Kanal eingezogenen Innenrohrs verklebt ist. Voraussetzung ist, daß das Innenrohr ebenfalls aus einem faserverstärkten, aushärtenden Kunststoff auf Epoxidharzbasis besteht. Eine beständige und fluiddichte Verbindung zwischen dem Anschlußformstück und dem Innenrohr ist nicht erreichbar, wenn das Innenrohr aus thermoplastischem Kunststoff gefertigt ist.

Besteht die Innenrohrauskleidung des Kanals aus thermoplastischem Kunststoff, so lehrt die DE-C-39 31 616 ein anderes Verfahren zur Auskleidung der Hausanschlußbereiche. Das die Hausanschlüsse zunächst überdeckende Innenrohr wird in den Bereichen, die vor einem Hausanschluß liegen, erwärmt und unter Druck so verformt, daß sich das thermoplastische Material an die Wandung des Hausanschlusses anlegt. Aus dem Material des Innenrohrs wird gleichsam ein Anschlußformstück durch thermoplastische Verformung hergestellt. Die Praxis zeigt aber, daß das nach der thermoplastischen Verformung abkühlende Material erheblich schrumpft und sich von der Wandung des Hausanschlusses löst. Außerdem ist die Materialverteilung des thermoplastisch verformten Anschlußformstückes oft nicht gleichmäßig. Die Praxis zeigt, daß das in den Hausanschluß eingeformte Material örtlich beachtliche Schwächungen bis hin zu Löchern aufweisen kann. Es bleiben erhebliche Undichtigkeiten im Anschlußbereich zwischen dem Hausanschluß und dem Innenrohr.

Aus der bereits am Anfang erwähnten EP-A-518 521 ist eine Schlauchanordnung zum Auskleiden von Hausanschlüssen bekannt, die in einen mit einem Innenrohr ausgekleideten Kanal münden. Der Schlauch ist aus einem dehnbaren Trägermaterial, das mit einer Kunstharzmasse getränkt ist und zu einem Anschlußformstück aushärten kann, um eine fluiddichte Verbindung zwischen dem Innenrohr eines Kanals und dem Hausanschluß zu bilden. Hierbei bildet der dem Innenrohr zugeordnete Endbereich des Trägermaterials einen an die Wandung des Innenrohrs anschließenden Flansch.

Der Erfindung liegt die Aufgabe zugrunde, einen Schlauch der eingangs beschriebenen Art zum Auskleiden eines Hausanschlusses anzugeben, der eine fluiddichte Verbindung mit einem in den Kanal eingezogenen Innenrohr aus thermoplastischem Kunststoff ermöglicht.

Zur Lösung dieser Aufgabe lehrt die Erfindung, daß der Flansch aus thermoplastischem Kunststoff, der mit dem Material des Innenrohrs verschweißbar ist, besteht, daß der dem Innenrohr zugeordnete Endbereich des Trägermaterials in den an die Wandung des Innenrohrs anschließenden Flansch eingebettet ist und daß an der dem Innenrohr zugeordneten Anschlußfläche des Flansches Heizleiterwendeln mit Anschlußkontakten für ein Elektroschweißgerät angeordnet sind.

Der Flansch ist beispielsweise durch Verschweißen von Flanschsegmentstücken, zwischen denen die Enden des thermisch beständigen Trägermaterials eingespannt sind, herstellbar. Es resultiert eine zugfeste, sichere Verankerung. Bevorzugtes Trägermaterial ist Glasfasergewebe.

Mit Hilfe eines Elektroschweißgerätes ist der Flansch des Schlauches mit dem Innenrohr des Kanals verschweißbar. Die Heizleiterwendeln, an welche das Elektroschweißgerät angeschlossen wird, sind so in den Flansch eingebettet, daß während des Schweißvorganges an den Berührungsflächen zwischen dem Flansch und dem Innenrohr eine direkte Wärmeübertragung stattfindet. Der Schweißvorgang ist automatisch steuerbar und führt nach dem Erkalten zu einer homogenen, kraftschlüssigen Verbindung. Das Heizwendelschweißen ist an sich bekannt. Im Rahmen der bekannten Maßnahmen werden auf diese Weise Kunststoffrohre und Kunststoffmuffen miteinander verbunden. Die Entwicklung fluiddichter Verbindungen zwischen Hausanschlüssen und Kanälen, die mit einem Innenrohr ausgekleidet sind, ist hiervon nicht beeinflußt worden.

Die Durchflußöffnung des Flansches sollte konturgenau an die Mündung des Hausanschlusses angepaßt sein. Die Mündung eines rechtwinklig anschließenden Hausanschlusses ist im allgemeinen kreisförmig. Bei einem spitz- oder stumpfwinkligen Anschluß des Hausanschlusses weist die Mündung eine elliptische Form auf.

Nach bevorzugter Ausführungsform der Erfindung wird der Flansch stufenfrei an das Innenrohr angeschlossen. Dies kann auf verschiedene Weise geschehen. Im Rahmen der Erfindung liegt es, daß das Innenrohr am Umfang der Hausanschlußmündung Ausfräsungen aufweist, in welche der Flansch einsetzbar ist. In der Praxis ist es aber auch ausreichend, wenn der Flansch als Rohrsegmentstück mit einer an das Innenrohr angepaßten Anschlußfläche und einer dem Kanalinnenraum zugeordneten Abschlußfläche ausgeführt ist, wobei die Anschluß- und Abschlußflächen im Kanalquerschnitt betrachtet nach außen konvergieren. In Umfangsrichtung wird auf diese Weise ein nahezu stufenfreier Übergang zwischen dem Innenrohr und dem Flansch möglich.

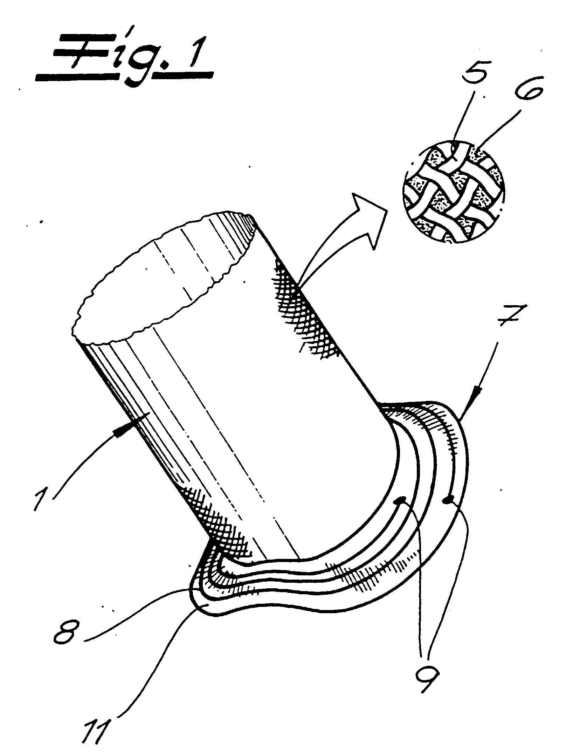

Im folgenden wird die Erfindung anhand einer lediglich ein Ausführungsbeispiel darstellenden Zeichnung ausführlich erläutert. Es zeigen schematisch
- Fig. 1: einen Schlauch zum Auskleiden von Hausanschlüssen in perspektivischer Darstellung,
- Fig. 2: den in Fig. 1 dargestellten Schlauch in eingebautem Zustand.

Der in den Figuren dargestellte Schlauch 1 dient zum Auskleiden von Hausanschlüssen 2, die in einen mit einem Innenrohr 3 ausgekleideten Kanal 4 einmünden. Das Innenrohr 3 des Kanals 4 besteht aus thermoplastischem Kunststoff, vornehmlich aus Polyethylen (HDPE) oder Polyurethan. Der Schlauch 1 besteht aus einem dehnbaren, gewebten oder gestrickten Trägermaterial 5, das mit einer aushärtenden Kunstharzmasse 6 getränkt oder beschichtet ist. Bevorzugtes Trägermaterial 5 ist Glasfasergewebe. Die Kunstharzmasse 6 ist insbesondere auf Epoxidharzbasis aufgebaut. Der Schlauch 1 härtet zu dem einen Anschlußformstück aus, welches eine fluiddichte Verbindung zwischen dem Innenrohr 3 des Kanals 4 und dem Hausanschluß 2 bildet. Eine Schlauchlänge, die lediglich den Anschlußbereich eines an den Kanal 4 anschließenden Seitenzulaufs (Hausanschluß) abdeckt, ist vielfach ausreichend. Der Schlauch 1 kann jedoch auch weit in den Seitenzulauf hineinverlegt sein und eine Länge von mehreren Metern besitzen.

Den Figuren entnimmt man, daß der dem Innenrohr 3 zugeordnete Endbereich des Trägermaterials 5 in einen an die Wandung des Innenrohrs 3 anschließenden Flansch 7 aus thermoplastischem Kunststoff eingebettet ist. Das Kunststoffmaterial des Flansches 7 ist mit dem Material des Innenrohrs 3 verschweißbar. An der dem Innenrohr 3 zugeordneten Anschlußfläche sind Heizleiterwendeln 8 mit Anschlußkontakten 9 für ein Elektroschweißgerät angeordnet. Die Verbindung zwischen dem Flansch 7 und dem Innenrohr 3 erfolgt durch Heizwendelschweißen. Die Heizleiterwendeln sind so in den Flansch 7 eingebettet, daß während des Schweißvorganges an den. Berührungsflächen zum Innenrohr 3 eine direkte Wärmeübertragung stattfindet. Der Schweißvorgang führt nach dem Erkalten zu einer homogenen, kraftschlüssigen Verbindung zwischen dem Flansch 7 und dem Innenrohr 3.

Die Durchflußöffnung 10 des Flansches 7 ist konturgenau an die Mündung des Hausanschlusses 2 angepaßt. Bei rechtwinklig an den Kanal 4 anschließenden Hausanschlüssen 2 ist die Durchflußöffnung 10 kreisförmig. Bei einem stumpf- oder spitzwinkligen Anschluß hat die Durchflußöffnung 10 eine elliptische Form. Der Flansch 7 ist als Rohrsegmentstück mit einer an das Innenrohr 3 angepaßten Anschlußfläche 11 ausgeführt. Die Außenkontur ist dem Heizwendelverlauf anzupassen. Insofern ist der Flansch 7 außenseitig mit Rundungen 12 versehen.

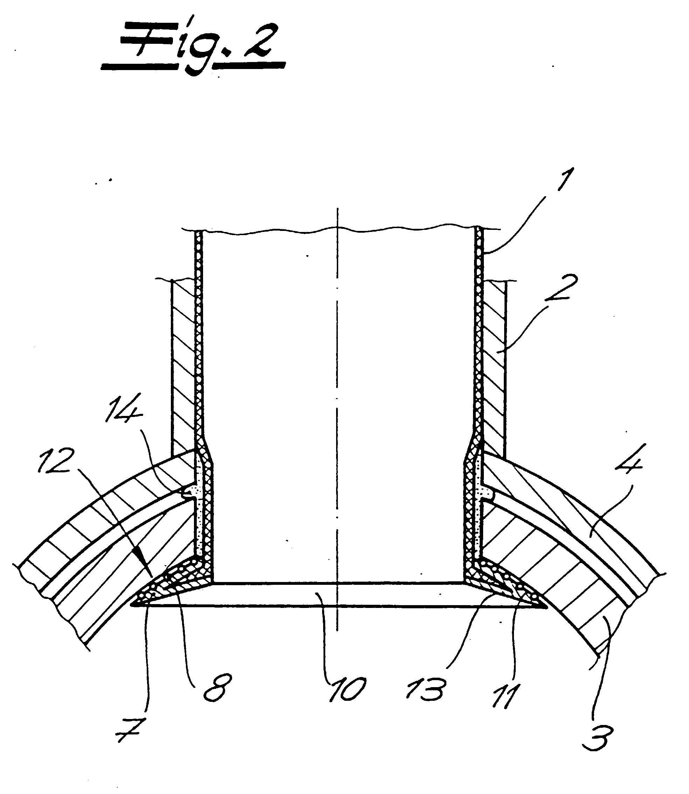

Insbesondere der Fig. 2 entnimmt man, daß der Flansch 7 eine an das Innenrohr 3 angepaßte Anschlußfläche 11 und eine dem Kanalinnenraum zugeordnete Abschlußfläche 13 aufweist, wobei die Anschluß- und Abschlußflächen 11. 13 im Kanalquerschnitt betrachtet nach außen konvergieren. Dabei resultiert in Umfangsrichtung ein annähernd stufenfreier Übergang zwischen dem Flansch 7 und dem Innenrohr 3. Im Rahmen der Erfindung liegt es auch, in das Innenrohr 3 Ausnehmungen (nicht dargestellt) einzufräsen, in die der Flansch 7 stufenfrei einpaßbar ist. Um zu verhindern, daß Grundwasser an der Außenseite des Hausanschlusses 2 in den Ringraum zwischen Kanal 4 und Innenrohr 3 eintritt, kann der Schlauch 1 beim Einbau mit einem dauerplastischen Material 14 beschichtet werden, welches unter Feuchtigkeit expandiert und bestehende Spalträume verschließt.

## Patentansprüche

1. Schlauch zum Auskleiden von Hausanschlüssen, die in einen mit einem Innenrohr (3) ausgekleideten Kanal (4) einmünden, wobei der Schlauch aus einem dehnbaren, gewebten oder gestrickten Trägermaterial (5), das mit einer aushärtenden Kunstharzmasse getränkt oder beschichtet ist, besteht und zu einem Anschlußformstück aushärtet, welches eine fluiddichte Verbindung zwischen dem Innenrohr (3) des Kanals (4) und dem Hausanschluß bildet, wobei der dem Innenrohr (3) zugeordnete Endbereich des Trägermaterials (5) einen an die Wandung des Innenrohrs (3) anschließenden Flansch (7) aufweist,
dadurch gekennzeichnet, daß der Flansch (7) aus thermoplastischem Kunststoff, der mit dem Material des Innenrohrs (3) verschweißbar ist, besteht, daß der dem Innenrohr (3) zugeordnete Endbereich des Trägermaterials (5) in den an die Wandung des Innenrohrs (3) anschließenden Flansch (7) eingebettet ist und daß an der dem Innenrohr (3) zugeordneten Anschlußfläche des Flansches (7) Heizleiterwendeln (8) mit Anschlußkontakten (9) für ein Elektroschweißgerät angeordnet sind.

2. Schlauch nach Anspruch 1, dadurch gekennzeichnet, daß die Durchflußöffnung (10) des Flansches (7) konturgenau an die Mündung des Hausanschlusses (2) angepaßt ist.

3. Schlauch nach Anspruch 1 oder 2, dadurch gekennzeichnet, daß der Flansch (7) stufenfrei an das Innenrohr (3) anschließbar ist.

4. Schlauch nach einem der Ansprüche 1 bis 3, dadurch gekennzeichnet, daß der Flansch (7) als Rohrsegmentstück mit einer an das Innenrohr (3) angepaßten Anschlußfläche (11) und einer dem Kanalinnenraum zugeordneten Abschlußfläche (13) ausgeführt ist, wobei die Anschluß- und Abschlußflächen (11, 13) im Kanalquerschnitt betrachtet nach außen konvergieren.

## Claims

1. A sleeve for lining service connections which lead into a channel (4) lined with an inner tube (3), the sleeve being made of an extensible, woven or knitted base material (5) which is impregnated or coated with a curing synthetic resin mass, and cured to form a moulded connection fitting which forms a fluid-tight connection between the inner tube (3) of the channel (4) and the service connection, that end region of the base material (5) which is associated with the inner tube (3) having a flange (7) which is connected to the wall of the inner tube (3), characterized in that the flange (7) is made of a thermoplastic material which may be welded to the material of the inner tube (3), in that that end region of the base material (5) which is associated with the inner tube (3) is embedded in the flange (7), which is connected to the wall of the inner tube (3), and in that heat-conducting coils (8) having connection contacts (9) for an electric welding device are arranged on the connection face, associated with the inner tube (3), of the flange (7).

2. A sleeve according to Claim 1, characterized in that the flow opening (10) in the flange (7) is adapted to the orifice in the service connection (2) such that they have precisely matching contours.

3. A sleeve according to Claim 1 or 2, characterized in that the flange (7) may be connected to the inner tube (3) in a manner without steps.

4. A sleeve according to one of Claims 1 to 3, characterized in that the flange (7) is constructed as a tube segment piece having a connection face (11), which is adapted to the inner tube (3), and a terminating face (13) which is associated with the inside of the channel, the connection and terminating faces (11, 13) outwardly converging, as seen in cross-section of the channel.

## Revendications

1. Revêtement tubulaire destiné à des branchements d'immeuble qui débouchent dans un canal (4) revêtu d'un tube intérieur (3), le revêtement tubulaire étant formé par un matériau de support (5) élastique, tissé ou tricoté, qui est imprégné ou revêtu d'une résine synthétique thermodurcissable, et étant durci pour former une pièce de raccord, qui forme une liaison étanche aux fluides entre le tube intérieur (3) du canal (4) et le branchement d'immeuble, l'extrémité du matériau de support (5), associée au tube intérieur (3) étant munie d'une collerette (7) attenante à la paroi du tube intérieur (3), caractérisé en ce que la collerette (7) est réalisée en matière thermoplastique, qui peut être soudée avec la matière du tube intérieur (3), en ce que l'extrémité du matériau de support (5), associée au tube intérieur (3), est enrobée dans la collerette (7) attenante à la paroi du tube intérieur (3), et en ce que des spires d'un fil de résistance (8), muni de contacts de connexion (9) pour une machine à souder électrique, sont disposées sur la face de raccordement de la collerette (7) associée au tube intérieur (3).

2. Revêtement tubulaire selon la revendication 1, caractérisé en ce que le contour de l'orifice de passage (10) de la collerette (7) est adaptée avec précision à la bouche du branchement d'immeuble (2).

3. Revêtement tubulaire selon la revendication 1 ou 2, caractérisé en ce que la collerette (7) peut être assemblée sans redents contre le tube intérieur (3).

4. Revêtement tubulaire selon l'une quelconque des revendications 1 à 3, caractérisé en ce que la collerette (7) est réalisée en forme de segment tubulaire muni d'une face de raccordement (11) adaptée au tube intérieur (3) et d'une face de recouvrement (13) associée au volume intérieur du canal, la face de raccordement et la face de recouvrement (11, 13) convergeant vers l'extérieur en considérant la section du canal.
